# EUROPÄISCHE PATENTSCHRIFT

(11) **EP 3 599 228 B1**
(45) Veröffentlichungstag und Bekanntmachung des Hinweises auf die Patenterteilung: **30.12.2020**
(21) Anmeldenummer: 19186752.2
(22) Anmeldetag: 17.07.2019
(51) Int. Cl.: C04B 28/02, C04B 28/04, C04B 28/08, C04B 28/18

(54) **VERFAHREN ZUR HERSTELLUNG VON PORÖSEM MINERALISCHEM BAUMATERIAL MIT VERBESSERTER FESTIGKEIT**
METHOD FOR PRODUCING POROUS MINERAL BUILDING MATERIAL WITH IMPROVED STRENGTH
PROCÉDÉ DE FABRICATION D'UN MATÉRIAU DE CONSTRUCTION MINÉRAL POREUX À RÉSISTANCE AMÉLIORÉE

(30) Priorität: 24.07.2018 DE 102018212322
(43) Veröffentlichungstag der Anmeldung: 29.01.2020
(73) Patentinhaber: Baustoffwerke Löbnitz GmbH & Co. KG, 04509 Löbnitz (DE)
(72) Erfinder: DROLL, Enrico, 06925 Annaburg, OT Prettin (DE); NICKEL, Reiko, 14943 Luckenwalde (DE); WOLFF, Guido, 48147 Münster (DE)
(74) Vertreter: Weickmann & Weickmann PartmbB

(56) Entgegenhaltungen:
- EP-A1- 0 038 552
- EP-A1- 0 151 452
- EP-A1- 3 385 243
- EP-A2- 0 673 733
- US-A- 3 928 539

## Beschreibung

Die Erfindung betrifft ein Verfahren zur Herstellung von porösem mineralischem Baumaterial und ein Material auf Calziumsilikathydrat-Basis, welches mit dem erfindungsgemäßen Verfahren hergestellt werden kann.

Poröse mineralische Materialien unterschiedlichster Art sind als Baustoffe bekannt. Aufgrund ihrer hohen Porosität zeichnen sie sich im Vergleich zu Beton durch eine deutlich geringere Rohdichte aus. Unter der Rohdichte versteht man die Dichte eines porösen Körpers basierend auf dem Volumen einschließlich der Porenräume. Während die Rohdichte bei Normalbeton zwischen etwa 2.000 und 2.600 kg/m³ liegt, werden mit porösen mineralischen Baustoffen üblicherweise Rohdichten im Bereich von 80 bis 600 kg/m³ erreicht. Durch den hohen Luftanteil ergeben sich verbesserte Wärmedämmeigenschaften. Ausschlaggebend ist die Wärmeleitfähigkeit, die mit dem Wärmeleitwert Lambda angegeben wird. Je kleiner der Wert, desto besser ist das Dämmvermögen.

Abhängig von der Art der Herstellung unterteilt man poröse mineralische Materialien in Porenbeton und Schaumbeton. Porenbeton wird üblicherweise durch Vermischen der Ausgangsstoffe Brandkalk, Zement, Quarzsand und Wasser mit einem Porenbildner wie Aluminiumpulver oder Aluminiumpaste hergestellt. Das metallische Aluminium entwickelt in der alkalischen Suspension Wasserstoffgas, so dass viele kleine Gasblasen entstehen, welche die allmählich ansteifende Mischung aufschäumen. Nach einem Dampfhärteprozess in einem Autoklaven besteht das fertige Produkt aus einer kristallinen Phase von Calziumsilikathydrat, welche großteils dem natürlichen Mineral Tobermorit entspricht. Bei der Herstellung von Schaumbeton werden anstelle von Aluminium Schaumbildner beispielsweise auf Basis von Tensiden oder Proteinen eingesetzt. Üblicherweise wird ein vorerzeugter Schaum in Beton eingemischt und das Rohprodukt anschließend dampfgehärtet. Alternativ ist auch ein direktes Aufschäumen durch Einblasen von Luft in das mit einem Schaumbildner versehene Baustoffgemisch möglich.

Um ein Material mit geringer Wärmeleitfähigkeit und guten Dämmeigenschaften zu erhalten ist es entscheidend, eine hohe Porosität bereitzustellen. Die hohe Porosität geht jedoch in der Regel zulasten der Festigkeit. Bisher bekannte Verfahren zur Herstellung von Schaumbeton können häufig keine ausreichende Druckfestigkeit gewährleisten oder erzielen schlechte Dämmeigenschaften.

Das Dokument EP 0 038 552 A1 offenbart ein Verfahren zur Herstellung von Wandbausteinen auf Kalksilikatbasis. Das Verfahren sieht vor, dass in eine Rohmischung aus silikathaltigem Material Kalk, Wasser und Zement ein Schaum eingebracht wird, die Mischung in Formen eingefüllt und in einem Autoklav einer Dampfhärtung unterzogen wird; es wird nicht beschrieben, dem Ausgangsgemisch Kaliumsilikat zuzusetzen.

Der Erfindung lag daher die Aufgabe zugrunde, ein Verfahren bereitzustellen, mit dem es gelingt, ein poröses mineralisches Baumaterial bereitzustellen, welches sich sowohl durch einen geringen Wärmeleitwert und als auch eine hohe mechanische Festigkeit auszeichnet. Bei dem porösen mineralischen Baumaterial handelt es sich im Sinne der vorliegenden Anmeldung um ein Material auf Calziumsilikathydrat-Basis. Genauer gesagt beschäftigt sich die Erfindung mit der Herstellung eines verbesserten Schaumbetons, wobei unter dem Begriff "Schaumbeton" ein hydrothermal gehärtetes, poröses mineralisches Material verstanden wird, zu dessen Herstellung zumindest Wasser, SiO₂, Kalkhydrat, Zement und Schaumbildner, vorzugsweise auf Tensid- oder Proteinbasis eingesetzt werden.

In der vorliegenden Erfindung wurde überraschend gefunden, dass die Festigkeit von Schaumbeton- unabhängig davon ob dieser durch Einmischen eines Schaums oder durch direktes Aufschäumen eines Baustoffgemischs erhalten wird - wesentlich verbessert werden kann, wenn als Ausgangsmaterial zusätzlich Kaliumsilikat eingesetzt wird. Gleichzeitig gelingt es mithilfe dieses zusätzlichen Rohstoffs, die Porosität weiter zu erhöhen. Dabei hat es sich als wesentlich erwiesen, Kaliumsilikat unmittelbar am Anfang zuzugeben, noch vor der Zugabe aller weiteren festen Bestandteile des Baumaterials. Bei anderen Varianten der Verfahrensführung ergeben sich nicht die gleichen vorteilhaften Eigenschaften.

Ein erster Aspekt der Erfindung betrifft daher ein Verfahren zur Herstellung eines porösen mineralischen Baumaterials auf Calziumsilikathydrat-Basis, umfassend die Schritte:
(i) Bereitstellen eines wässrigen Gemischs, welches Wasser, SiO₂, Kalkhydrat, Zement, Kaliumsilikat und einen Erhärtungsbeschleuniger umfasst, wobei zunächst Wasser und Kaliumsilikat vermischt und anschließend die weiteren festen Bestandteile zugegeben und eingemischt werden,
(ii.1) Bereitstellen eines Schaumes durch Einbringen eines Gases, insbesondere Luft, in ein Gemisch umfassend Wasser und einen Schaumbildner, und Einmischen des Schaumes in das wässrige Gemisch aus Schritt (i), um eine Rohmischung zu erhalten
   oder
(ii.2) Einbringen wenigstens eines Schaumbildners in das wässrige Gemisch aus Schritt (i), Aufschäumen des resultierenden Gemischs unter Zufuhr eines Gases, insbesondere Luft, in einem Oszillationsmischer, und ggf. Überführen des aufgeschäumten Gemischs zu einem weiteren Mischer, vorzugsweise Horizontalmischer, und Vermischen mit geringer Drehzahl vorzugsweise im Bereich von 20-200 UpM, um eine Rohmischung zu erhalten,
(iii) Einbringen der Rohmischung in eine Form, und Belassen der Rohmischung für mindestens 5 h, vorzugsweise für mindestens 10 h und besonders bevorzugt für mindestens 15 h, in der Form, um ein Rohmaterial zu erhalten,
(iv) Dampfhärten des in Schritt (iii) erhaltenen Rohmaterials in einem Autoklaven, dies ggf. nach Zuschneiden in Teile und
(v) Trocknen des dampfgehärteten Rohmaterials.

In Schritt (i) des erfindungsgemäßen Verfahrens wird ein wässriges Gemisch der Ausgangsmaterialien hergestellt. Dabei werden zunächst Wasser und Kaliumsilikat vermischt und erst anschließend die weiteren festen Bestandteile SiO₂ bzw. ein silikathaltiges Material, Kalkhydrat (gelöschter Kalk), Zement und Erhärtungsbeschleuniger zugegeben und eingemischt, wobei ggf. weiteres Wasser zugegeben werden kann.

Der Effekt des zusätzlichen Rohstoffs Kaliumsilikat liegt in einer Stabilisierung der Struktur des geschäumten Rohmaterials, sodass sich die feinen Schaumbläschen nicht verbinden und zu größeren Bläschen auflösen sondern gleichmäßig fein verteilt erhalten bleiben. Es entsteht eine besonders homogene Struktur die auch bei der Weiterverarbeitung erhalten bleibt. Vorzugsweise wird Kaliumsilikat in einer Menge von 1-5 Gew.-% bezogen auf den Gesamtfeststoffgehalt des wässrigen Gemischs von Schritt (i) zugesetzt. Besonders geeignet ist eine Menge von 1,5 - 2,5 Gew.-%, beispielsweise etwa 2 Gew.-% Kaliumsilikat.

Die Bezeichnung "SiO₂" wird im Sinne der Erfindung zusammenfassend für beliebige silikathaltige Materialien verwendet. Als silikathaltiges Material eignen sich Quarzsand bzw. quarzhaltiger Sand oder quarzhaltiges Gesteinsmehl. Bezogen auf den Gesamtfeststoffgehalt des wässrigen Gemischs von Schritt (i) beträgt der Anteil an SiO₂ etwa 25 bis 35 Gew.-%, vorzugsweise etwa 27 bis 32 Gew.-%.

Die Begriffe Kalkhydrat und gelöschter Kalk werden hierin austauschbar verwendet und bezeichnen Calciumhydroxid. Bezogen auf den Gesamtfeststoffgehalt des wässrigen Gemischs von Schritt (i) wird Kalkhydrat in einer Menge von etwa 18 bis 35 Gew.-%, vorzugsweise etwa 25 bis 32 Gew.-% verwendet.

Zement besteht chemisch gesehen aus etwa 58 bis 76 % Calziumoxid (CaO), 18 bis 26 % Siliziumdioxid (SiO₂), 4 bis 10 % Aluminiumoxid (Al₂O₃) und 2 bis 5 % Eisenoxid (Fe₂O₃). Diese Hauptbestandteile liegen im Zement vorrangig in Form von Tricalciumsilikat (3CaO*SiO₂), Dicalciumsilikat (2CaO*SiO₂), Tricalciumaluminat (3CaO*Al₂O₃) und Tetracalciumaluminatferrit (4CaO*Al₂O₃*Fe₂O₃) vor. Im Sinne der vorliegenden Erfindung kann grundsätzlich ein beliebiger Zement eingesetzt werden, wie beispielsweise Portlandzement, Portlandkompositzement, Hochofenzement, Puzzolanzement oder Kompositzement. Bevorzugt wird erfindungsgemäß Portlandzement eingesetzt. Bezogen auf den Gesamtfeststoffgehalt des wässrigen Gemischs von Schritt (i) wird Zement in einer Menge von etwa 25 bis 45 Gew.-%, beispielsweise etwa 30 bis 40 Gew.-% eingesetzt. Die Verwendung von Zement, z.B. Portland-Zement, in dieser Menge hat den Vorteil, dass das hergestellte Baumaterial eine hohe Zugfestigkeit aufweist. Die Rohmischung hat eine lange offene Verarbeitungszeit, so dass ein Mischer, in welchem das wässrige Gemisch in Schritt (i) bereitgestellt wird, nur bei längeren Stillstandszeiten zwischen den Mischvorgängen zu reinigen ist.

Ein Erhärtungsbeschleuniger im Sinne der Erfindung dient der Beschleunigung des Erhärtens und verbessert vor allem die Anfangsfestigkeit des Materials. Geeignet sind insbesondere Erhärtungsbeschleuniger die Calziumsilikathydrat-Kristalle enhalten, beispielsweise in Form einer wässrigen Suspension wie z. B der Erhärtungsbeschleuniger X-Seed erhältlich von der Firma BASF. Weitere zur Verwendung bei der erfindungsgemäßen Herstellung eines Baumaterials geeignete Erhärtungsbeschleuniger sind in den internationalen Patentanmeldungen WO 2010/026155 und WO 2011/131378 beschrieben. Ein Erhärtungsbeschleuniger wird im Sinne der Erfindung vorzugsweise in einer Menge von etwa 3 bis 8 Gew.-% bezogen auf den Gesamtfeststoffgehalt des wässrigen Gemischs von Schritt (i) eingesetzt.

Den Ausgangsmaterialien für ein erfindungsgemäßes Baumaterial kann außerdem Rückgut in Form eines Pulvers oder Granulats, insbesondere als Suspension, zugesetzt werden. Unter dem Begriff "Rückgut" werden Altmaterialien in zerkleinerter Form verstanden. Beispielsweise können zu Pulver zerkleinerte Reststücke von erfindungsgemäßem Baumaterial oder beim Zerschneiden des Materials zu Platten anfallender Staub eingesetzt werden. Auch Pulver oder Granulate anderer mineralischer Baustoffe auf Calziumsilikathydrat-Basis sind geeignet. Das Rückgut kann beispielsweise in einer Menge von etwa 3 bis 7 Gew.-% bezogen auf den Gesamtfeststoffgehalt des wässrigen Gemischs von Schritt (i) eingesetzt werden.

Darüber hinaus können dem wässrigen Gemisch in Schritt (i) weitere optionale Ausgangsmaterialien, wie z. B. Kaolin, Meta-Kaolin, Rückgut, Hydrophobierungsmittel, Steinkohle, Flugasche, Gips, Anhydrit und weitere im Fachbereich übliche Betonzusatzstoffe und Gemische davon zugegeben werden. Weitere Beispiele für geeignete Zusatzstoffe sind ultrahochfester Beton (UHPC), Tonerde (Aluminium-III-Oxide), Kalkerden und Kieselerden.

Kaolin oder Meta-Kaolin kann als optionaler Bestandteil dem wässrigen Gemisch von Schritt (i) zugegeben werden. Bevorzugt wird Kaolin in einer Menge von etwa 5 bis 10 Gew.-%, insbesondere etwa 6 bis 8 Gew.-% eingesetzt. Kaolin setzt als puzzolanischer Zuschlagstoff die Hydrationswärme und somit Spannungen herab.

Um die Eigenschaften des erfindungsgemäß hergestellten Schaumbetons weiter zu optimieren, können Zusatzstoffe wie Zeolithe, Aerogel, Perlite oder Glaskugeln verwendet werden. Diese Zusatzstoffe können entweder bereits in das wässrige Gemisch der Ausgangsmaterialien von Schritt (i) oder zu einem späteren Zeitpunkt des Verfahrens zugegeben werden. Aerogel ist ein hochporöser Festkörper vorzugsweise auf Silikat-Basis, der dem erfindungsgemäßen Schaumbeton eine noch weiter verringerte Wärmeleitfähigkeit verleihen kann. Perlite werden insbesondere in Form von Blähperlit zugegeben. Diese verringern ebenfalls die Wärmeleitfähigkeit des Schaumbetons. Glaskugeln wie z. B. 3M Glass Bubbles sind Glaskügelchen mit einem Durchmesser von üblicherweise 1 bis 1.000 µm. Diese fungieren als leichtgewichtiger Füllstoff, der aufgrund seiner geringen Wärmeleitfähigkeit in der Lage ist, dem erfindungsgemäß hergestellten Schaumbeton eine besonders gute wärmedämmende Wirkung zu verleihen. Wenn diese oder ähnliche Zusatzstoffe eingesetzt werden, können sie zu einem beliebigen Zeitpunkt während der Herstellung - aber erst nach Kaliumsilikat - zugegeben werden, sofern sichergestellt werden kann, dass sich die Zusatzstoffe gleichmäßig in dem Material verteilen.

Das Verhältnis von Wasser zu Feststoff wird in dem wässrigen Gemisch von Schritt (i) so gewählt, dass es etwa 0,5:1 bis 1,5:1 beträgt, vorzugsweise etwa 0,6:1 bis 1:1. Mit abnehmendem Wasser-zu-Feststoff-Verhältnis nimmt die Viskosität deutlich zu. Außerdem konnte eine Zunahme der Grünstandsfestigkeit festgestellt werden. Das Unterrühren des Schaums oder Aufschäumen in Gegenwart eines Schaumbildners wird mit abnehmendem Wasser-zu-Feststoff-Verhältnis jedoch schwieriger. Andererseits sollte das Verhältnis von Wasser zu Feststoff auch nicht wesentlich vergrößert werden, da hierdurch die Gussstabilität verringert, die Ansteifungszeit verlängert und die Wassermenge im Block erhöht wird, was aus trocknungstechnischen Gründen nachteilig ist. Ein Wasser-zu-Feststoff-Verhältnis von 0,6:1 bis 1:1 ist empfehlenswert, da hier eine gute Homogenisierung beim Mischen und gute Produkteigenschaften erreicht werden.

Grundsätzlich ist es möglich, dem wässrigen Gemisch von Schritt (i) auch organische oder anorganische Fasern zuzusetzen. In einem bevorzugten Aspekt der Erfindung enthält das wässrige Gemisch von Schritt (i) jedoch keine organischen oder anorganischen Fasern. Es wurde gefunden, dass die Anwesenheit von Fasern sich nachteilig auf die Porosität des hergestellten Materials auswirkt. Insbesondere kann sich die Standzeit verlängern, da Fasern unkontrolliert Wasser abgeben können. Die über den Schaum oder Aufschäumvorgang eingebrachten feinporigen Luftblasen werden zerstört. Falls jedoch eine besonders hohe Festigkeit des Baumaterials im Vordergrund steht, können Fasern wie z. B. Zellulosefasern, Carboxymethylcellulose, Kokosnussfasern oder Glasfasern als Zusatzstoffe verwendet werden.

Nach dem Vermischen der verschiedenen Bestandteile in Schritt (i) beträgt die Temperatur des wässrigen Gemischs vorzugsweise etwa 19 bis 30°C. Weiter bevorzugt ist eine Temperatur im Bereich von etwa 20 bis 25°C. Diese Temperatur kann beispielsweise durch Wahl der Temperatur des verwendeten Wassers in Abhängigkeit von der Temperatur der Feststoffe eingestellt werden.

Die Bereitstellung des wässrigen Gemischs in Schritt (i) erfolgt vorzugsweise in einem Mischer, insbesondere einem Vertikalmischer. Der Vorteil in der Verwendung eines Vertikalmischers besteht darin, dass das wässrige Gemisch an der Unterseite kontinuierlich abgeführt werden kann, ohne dass größere Mengen an Luft mitgelangen.

In das wässrige Gemisch aus Schritt (i) wird im darauffolgenden Schritt (ii) ein Schaum eingemischt (Variante (ii.1)) oder es erfolgt ein direktes Aufschäumen des Gemischs nach Zugabe wenigstens eines Schaumbildners (Variante (ii.2)).

Als Schaumbildner eignen sich im Sinne der Erfindung (sowohl für die separate Erzeugung eines Schaums als auch für ein direktes Aufschäumen) insbesondere Tenside und Proteine. Diese können wahlweise mit Stabilisatoren oder Hilfsstoffen kombiniert werden. Tenside können grundsätzlich beliebig aus natürlichen und synthetischen Tensiden sowie Gemischen davon ausgewählt werden. Es wurde erfindungsgemäß gefunden, dass sich für die Herstellung von hydrophobiertem mineralischem Baumaterial besonders anionische und nichtionische Tenside und Proteine als Schaumbildner eignen. Diese sind insofern von Vorteil, als sie eine Hydrophobierung des mineralischen Baumaterials erleichtern. Besonders bevorzugt sind nicht ionische Tenside.

In Variante (ii.1) wird separat von der Herstellung des wässrigen Gemischs ein Schaum bereitgestellt. Hierfür wird Luft oder ein anderes Gas in ein Gemisch aus Wasser und Schaumbildner eingebracht. Weiterhin können Stabilisatoren zugesetzt werden. Zur Herstellung des Schaums in Schritt (ii.1) kann vorteilhafterweise ein Schaumerzeuger, z.B. eine Schaumkanone, verwendet werden.

Es hat sich erfindungsgemäß als vorteilhaft erwiesen, einen feinporigen Schaum mit gleichmäßiger, definierter Porengröße im Bereich von 100 bis 800 µm zu verwenden. Die Porendurchmesser besitzen günstigerweise eine relativ schmale Gaussverteilung.

Die zugegebene Schaummenge richtet sich nach der gewünschten Rohdichte des Endprodukts, die hierdurch auf einen gewünschten Wert im Bereich von 80 bis 130 kg/m² eingestellt wird. Es ergeben sich homogene Produkte guter und gleichmäßiger Festigkeit und vorbestimmter Rohdichte.

Die Temperatur des in Schritt (ii.1) bereitgestellten Schaums entspricht vorteilhafterweise im Wesentlichen der Temperatur des wässrigen Gemischs von Schritt (i). Bevorzugt ist eine Temperatur im Bereich von etwa 19 bis 30°C, weiter bevorzugt etwa 20 bis 25°C. Vorteilhafterweise sollte die Temperatur des Schaums von Schritt (ii.1) um nicht mehr als 5 K von der Temperatur des wässrigen Gemischs von Schritt (i) abweichen.

Schaum und wässriges Gemisch werden in Schritt (ii.1) miteinander vermischt, um eine Rohmischung zu erhalten. Hierfür kann beispielsweise der separat erzeugte Schaum in den Mischer eingebracht werden, in welchem das wässrige Gemisch bereitgestellt wurde. Bei niedriger Drehzahl des Mischwerkzeugs wird der Schaum dann in das wässrige Gemisch untermischt. Das Einbringen des Schaums in das wässrige Gemisch kann auch über ein Y-förmiges Mischrohr erfolgen, in das über eine erste Speiseleitung das wässrige Gemisch aus Schritt (i) und über eine zweite Speiseleitung der Schaum zugeführt wird. Die beiden Massen werden dann gemeinsam weiter durch einen statischen Mischer gefördert, wo eine Homogenisierung der Schaummasse erfolgt.

Bei Variante (ii.2) kann das Einbringen des Schaumbildners vor oder gleichzeitig mit dem Aufschäumen des Gemischs erfolgen. In einer ersten bevorzugten Ausführungsform wird zunächst wenigstens ein Schaumbildner in das wässrige Gemisch aus Schritt (i) eingebracht, bevor das mit Schaumbildner versetzte wässrige Gemisch in einem anschließenden Schritt aufgeschäumt wird. In einer alternativen Ausführungsform wird das wässrige Gemisch aus Schritt (i) zunächst in einen Oszillationsmischer überführt, in welchen direkt der Schaumbildner zudosiert wird und in welchem das Aufschäumen des Gemischs unter Zufuhr eines Gases erfolgt.

Wenn der Schaumbildner vor dem Aufschäumen in das wässrige Gemisch eingebracht wird, ist hierfür vorzugsweise ein weiterer Mischer, z. B. Vertikalmischer, vorgesehen, in den zum einen das wässrige Gemisch aus Schritt (i) und zum anderen wenigstens ein Schaumbildner zudosiert werden. Dies geschieht vorzugsweise unter Bedingungen, bei denen die Zufuhr größerer Mengen an Luft vermieden wird. Die Anwesenheit von Luft oder anderen Gasen hätte ansonsten zur Folge, dass der Schaumbildner bereits aufschäumt. Erfindungsgemäß erfolgt ein Aufschäumen jedoch bevorzugt erst, nachdem der Schaumbildner möglichst homogen in das wässrige Gemisch aus Schritt (i) eingemischt wurde.

Das ggf. bereits mit einem Schaumbildner vermischte Gemisch aus Schritt (i) wird gemäß Variante (ii.2) in einen Oszillationsmischer überführt und dort unter Zufuhr eines Gases, insbesondere Luft, aufgeschäumt. Sofern der Schaumbildner nicht bereits vorab zugegeben wurde, erfolgt in dem Oszillationsmischer auch die Zudosierung des Schaumbildners. Ein für die Verwendung in der vorliegenden Erfindung geeigneter Oszillationsmischer umfasst vorzugsweise eine Kammer, in die das Ausgangsgemisch, z.B. das ggf. mit Schaumbildner vermischte wässrige Gemisch aus Schritt (i), eingebracht und dort mit Gas, insbesondere Luft, versetzt wird. Zu diesem Zweck umfasst die Kammer ein feststehendes Aufschäumelement, das zum Einbringen von Gas in die Kammer ausgebildet ist. Die Kammer wird über eine Antriebseinrichtung in eine oszillierende Rotationsbewegung um ihre Mittelachse versetzt. Wenn der Schaumbildner erst direkt in den Oszillationsmischer zugegeben wird, umfasst dieser zusätzlich eine Vorrichtung für das Einbringen von Schaumbildner in die Kammer.

Die Bedingungen des Aufschäumens im Oszillationsmischer werden vorzugsweise so gewählt, dass ein aufgeschäumtes Gemisch mit einer Rohdichte im Bereich von 40 bis 120 kg/m³, vorzugsweise 60 bis 100 kg/m³, entsteht. Es wurde gefunden, dass sich so besonders homogene Produkte mit guter und gleichmäßiger Festigkeit ergeben.

Gemäß Variante (ii.2) der Erfindung kann das mit Schaumbildner vermischte Gemisch aus Schritt (ii) direkt oder über einen oder mehrere Vorlagebehälter, beispielsweise einen weiteren Vertikalmischer, in einen Oszillationsmischer überführt werden. Dadurch kann gewährleistet werden, dass der Oszillationsmischer auch bei einem kontinuierlichen Betrieb keine Luft zieht und ein Aufschäumen ausschließlich durch das gezielt in den Oszillationsmischer eingeblasene Gas erfolgt. Auf diese Weise kann die Porosität des resultierenden Gemischs genau reguliert werden.

Das aufgeschäumte Gemisch aus Schritt (ii.2) wird anschließend zu einem weiteren Mischer, vorzugsweise Horizontalmischer, überführt und dort bei geringer Drehzahl vermischt, um eine Rohmischung zu erhalten. Das Vermischen in dem weiteren Mischer dient dazu, das aufgeschäumte Gemisch zu homogenisieren und zu vermeiden, dass sich in dem Material Bereiche mit besonders hoher oder besonders niedriger Porosität ausbilden. Der weitere (Horizontal-)Mischer wird mit geringer Drehzahl betrieben, vorzugsweise im Bereich von 20 bis 200 UpM, beispielsweise 30 bis 70 UpM. Bei einer derart geringen Drehzahl bleiben die durch das Aufschäumen erzeugten Bläschen erhalten und verteilen sich gleichmäßig über das Material. Das aufgeschäumte Gemisch verbleibt vorzugsweise nur für kurze Zeit, beispielsweise 10 Sekunden bis 10 Minuten oder 20 Sekunden bis 1 Minute in dem (horizontalen) Mischer und wird dann möglichst rasch in eine Form abgeleitet.

Bei dem Überführen des aufgeschäumten Gemischs aus dem Oszillationsmischer in den weiteren Mischer kann sich dieser noch im Stillstand oder bereits bei geringer Drehzahl wie oben angegeben befinden. Abhängig davon variiert die Verweilzeit des aufgeschäumten Gemischs in dem weiteren Mischer. Das Ableiten aus dem weiteren Mischer in die Form erfolgt möglichst rasch in einem Schritt, wobei es ebenfalls möglich ist, aus einem weiteren Mischer mehrere Formen (parallel) zu befüllen oder eine Form mit dem Mischgut aus mehreren weiteren Mischern zu befüllen.

Anstelle eines horizontalen Mischers eignet sich selbstverständlich auch ein Vertikal- oder anderer Mischer.

In einer alternativen Ausführungsform der Erfindung kann das aufgeschäumte Gemisch aus dem Oszillationsmischer auch direkt in die Form abgelassen werden und in der Form nochmals kurz durchmischt werden. Beispielsweise können Mischwerkzeuge von oben in die gefüllte Form eintauchen und das aufgeschäumte Gemisch durchmischen. Auch bei dieser Ausführungsvariante wird das Mischwerkzeug mit geringer Drehzahl betrieben, vorzugsweise im Bereich von 20 bis 200 UpM, um zu gewährleisten, dass die durch das Aufschäumen erzeugten Bläschen erhalten bleiben und sich gleichmäßig über das Material verteilen. Beispielsweise ist es möglich, die Mischwerkzeuge in das aufgeschäumte Material einzutauchen und bei geringer Drehzahl durch die Form zu bewegen, um eine Homogenisierung zu erreichen und zu vermeiden, dass sich in dem Material Bereiche mit besonders hoher oder besonders niedriger Porosität ausbilden.

Die erhaltene Rohmischung wird in Schritt (III) in eine Form eingebracht. In dieser Form verbleibt die Rohmischung für mindestens 5 h, bevorzugt für mindestens 10 h und besonders bevorzugt für mindestens 15 h, um ein Rohmaterial zu erhalten. Vorzugsweise verbleibt die Rohmischung für 6 bis 72 h in der Form. Die Temperatur wird dabei vorzugsweise so gewählt, dass sie in etwa der Ausgangstemperatur des wässrigen Gemischs und des aufgeschäumten Gemischs entspricht. Bevorzugt weicht die Temperatur um nicht mehr als 5 K von der Ausgangstemperatur des wässrigen Gemischs und des mit Schaum versetzten bzw. aufgeschäumten Gemischs ab.

Das Rohmaterial wird in Schritt (iv) dampfgehärtet, dies ggf. nach Aufteilen, insbesondere Zerschneiden, in kleinere Portionen. Hierzu wird das Rohmaterial in einen Autoklaven eingebracht und bei geeigneten Druck- und Temperaturbedingungen gehärtet. Vorteilhafterweise ist der Druck in dem Autoklaven zunächst gegenüber Atmosphärendruck um 0,2 bis 0,5 bar abgesenkt. Durch das Evakuieren kann die Masse schneller aufgewärmt und auf maximale Temperatur gebracht werden. Je intensiver die Vakuumbehandlung, umso geringer ist die Temperaturdifferenz zwischen dem Zentrum des Blocks und dem Dampfraum. Durch langsames Aufdampfen des Autoklaven werden Temperaturunterschiede zwischen inneren und äußeren Blockbereichen verringert, so dass Thermospannungen, die zu Rissen führen, vermieden werden. Als günstig hat sich eine langsame Aufheizrate erwiesen, wobei im unteren Druckbereich ein kleiner Aufheizgradient notwendig ist, um ein Zerfließen bzw. Zerstören des gewünschten Materials zu vermeiden. Mit Aufheizzeiten von ca. 1 bis 4 h ist eine rissfreie Härung möglich. Zur Erhöhung der Verfahrenssicherheit beträgt die daran anschließende Haltezeit 8 h bei einem Haltedruck von 12 bar. Da ein zu schnelles Abdampfen zu Härteschäden im Material führen würde, sollte die Abdampfzeit bei 2 bis 4,5 h liegen.

Bei dem Schritt des Dampfhärtens in einem Autoklaven kann das Rohmaterial sich wahlweise noch in der Form befinden oder die Form kann zuvor zumindest teilweise entfernt werden.

In einer bevorzugten Ausführungsform der Erfindung wird die Form vor dem Dampfhärten bis auf den Formboden entfernt. Das auf dem Formboden befindliche Rohmaterial kann dann optional noch weiter vorgelagert werden (z. B. 6 bis 72h) bis es dann, weiterhin auf dem Formboden befindlich, in den Autoklaven eingeführt und dort dampfgehärtet wird. Der Formboden dient dabei einer Stabilisierung des ansonsten fragilen Rohmaterials.

Nach dem Dampfhärten kann das Material wahlweise in kleinere Blöcke geschnitten werden. Ebenfalls möglich und sogar zu empfehlen ist es, bereits das Rohmaterial vor dem Schritt des Dampfhärtens in kleinere Stücke zu zerteilen.

In Schritt (v) des erfindungsgemäßen Verfahrens erfolgt eine Trocknung des dampfgehärteten Rohmaterials.

Das aus dem Trocknungsprozess stammende Wasser und/oder Kondensat aus dem Dampfhärtungsverfahren im Autoklaven kann aufgefangen und ggf. nach Aufarbeitung dem wässrigen Ausgangsgemisch von Schritt (i) des erfindungsgemäßen Verfahrens zugegeben werden. Dies bewirkt eine verbesserte Festigkeit des Materials bzw. eine bessere Wirkung des Zements. Vor allem die Wiederverwendung von Kondensat aus dem Autoklavierungsprozess hat sich hier als besonders vorteilhaft erwiesen.

Falls gewünscht schließt an die Trocknung eine mechanische Nachbearbeitung des erhaltenen Materials an. Das Material kann beispielsweise auf ein gewünschtes Format zugesägt werden. Die Nachbearbeitung kann weiter auch eine Grundierung oder Hydrophobierung einschließen, um beispielsweise die Witterungsbeständigkeit des Materials zu erhöhen. Auch eine Beschichtung des Materials ist möglich.

In einer bevorzugten Ausführungsform der Erfindung schließt die Nachbearbeitung ein Besprühen des Materials mit einer wässrigen Lösung von Kaliumsilikat ein. Dadurch wird Staub gebunden, sodass das Material bei weiteren Transport- und Verarbeitungsschritten angenehmer zu handhaben ist. Selbstverständlich kommt neben dem Besprühen auch eine beliebige andere Art der Oberflächenbehandlung mit der wässrigen Kaliumsilikatlösung in Frage.

Ein weiterer Gegenstand der vorliegenden Erfindung ist ein poröses mineralisches Baumaterial, welches nach dem erfindungsgemäßen Verfahren erhältlich ist, und eine Rohdichte von 80 bis 130 kg/m³ und einen Wärmeleitwert λ von weniger als 0,040 W/mK aufweist. Das Material besteht im Wesentlichen aus Calziumsilikathydrat, in dem eine Vielzahl von feinen Poren homogen verteilt ist.

Durch die erfindungsgemäße Herstellungsweise ist es überraschenderweise möglich, zum einen die Wärmeleitfähigkeit signifikant herabzusetzen und einen Wärmeleitwert λ von weniger als 0,040 W/mK zu erreichen. Bevorzugt wird der Wärmeleitwert λ auf weniger als 0,039 W/mK, weiter bevorzugt weniger als 0,038 W/mK oder weniger als 0,037 W/mK verringert.

Zum anderen gelingt es, eine hohe mechanische Festigkeit des Materials zu gewährleisten. Das erfindungsgemäß hergestellte Baumaterial zeichnet sich bevorzugt durch eine im Vergleich zu auf andere Weise aus den gleichen Bestandteilen erhaltenem hydrothermal gehärtetem Schaumbeton deutlich verbesserte Druckfestigkeit und Biegezugfestigkeit aus. Es eignet sich daher insbesondere als Dämmmaterial zur Wärmedämmung sowie als Brandschutzmaterial.

## Patentansprüche

1. Verfahren zur Herstellung eines porösen mineralischen Baumaterials auf Calziumsilikathydrat-Basis, umfassend die Schritte:
(i) Bereitstellen eines wässrigen Gemischs, welches Wasser, SiO₂, Kalkhydrat, Zement, Kaliumsilikat und einen Erhärtungsbeschleuniger umfasst, wobei zunächst Wasser und Kaliumsilikat vermischt und anschließend die weiteren festen Bestandteile zugegeben und eingemischt werden,
(ii.1) Bereitstellen eines Schaumes durch Einbringen eines Gases, insbesondere Luft, in ein Gemisch umfassend Wasser und einen Schaumbildner, und Einmischen des Schaumes in das wässrige Gemisch aus Schritt (i), um eine Rohmischung zu erhalten
oder
(ii.2) Einbringen wenigstens eines Schaumbildners in das wässrige Gemisch aus Schritt (i), Aufschäumen des resultierenden Gemischs unter Zufuhr eines Gases, insbesondere Luft, in einem Oszillationsmischer, und ggf. Überführen des aufgeschäumten Gemischs zu einem weiteren Mischer, vorzugsweise Horizontalmischer, und Vermischen mit geringer Drehzahl vorzugsweise im Bereich von 20-200 UpM, um eine Rohmischung zu erhalten,
(iii) Einbringen der Rohmischung in eine Form, und Belassen der Rohmischung für mindestens 5 h, vorzugsweise für mindestens 10 h und besonders bevorzugt für mindestens 15 h, in der Form, um ein Rohmaterial zu erhalten,
(iv) Dampfhärten des in Schritt (iii) erhaltenen Rohmaterials in einem Autoklaven, dies ggf. nach Zuschneiden in Teile und
(v) Trocknen des dampfgehärteten Rohmaterials.

2. Verfahren nach Anspruch 1, wobei der Erhärtungsbeschleuniger Calziumsilikathydrat-Kristalle, vorzugsweise in wässriger Suspension, umfasst.

3. Verfahren nach Anspruch 1 oder 2, wobei das wässrige Gemisch in Schritt (i) mindestens einen weiteren Bestandteil umfasst, der ausgewählt ist aus Kaolin, Rückgut, Hydrophobierungsmittelen, weiteren Betonzusatzstoffen und Gemischen davon.

4. Verfahren nach einem der vorhergehenden Ansprüche, wobei das wässrige Gemisch in Schritt (i) bezogen auf den Gesamtfeststoffgehalt
25-35 Gew.-% SiO₂,
18-35 Gew.-% Kalkhydrat,
25-45 Gew.-% Zement,
1-5 Gew.-% Kaliumsilikat,
ggf. 5-10 Gew.-%, vorzugsweise 6-8 Gew.-% Kaolin, und
3-8 Gew.-% Erhärtungsbeschleuniger umfasst.

5. Verfahren nach einem der vorhergehenden Ansprüche, wobei das Verhältnis von Wasser zu Feststoff in dem wässrigen Gemisch von Schritt (i) etwa 0,5:1 bis 1,5:1, vorzugsweise 0,6:1 bis 1:1 beträgt.

6. Verfahren nach einem der vorhergehenden Ansprüche, wobei das wässrige Gemisch in Schritt (i) keine organischen oder anorganischen Fasern umfasst.

7. Verfahren nach einem der vorhergehenden Ansprüche, wobei die Temperatur des wässrigen Gemischs von Schritt (i) etwa 19-30°C, vorzugsweise etwa 20-25°C beträgt.

8. Verfahren nach einem der vorhergehenden Ansprüche, wobei der Schaumbildner ein Tensid oder Protein umfasst.

9. Verfahren nach einem der vorhergehenden Ansprüche, wobei in Schritt (ii.1) beim Einmischen des Schaums die Temperatur des Schaumes in etwa der Temperatur des wässrigen Gemischs von Schritt (i) entspricht, vorzugsweise wobei die Temperatur des Schaums um nicht mehr als 5K von der Temperatur des wässrigen Gemischs abweicht.

10. Verfahren nach einem der vorhergehenden Ansprüche, wobei in Schritt (ii.2) das wässrige Gemisch aus Schritt (i) in einen zweiten Mischer, vorzugsweise Vertikalmischer, überführt und dort mit wenigstens einem Schaumbildner vermischt wird, vorzugsweise unter Bedingungen, bei denen ein Aufschäumen im Wesentlichen vermieden wird.

11. Verfahren nach Anspruch 10, wobei das mit Schaumbildner versetzte Gemisch direkt oder über mindestens einen Vorlagebehälter, beispielsweise einen weiteren Vertikalmischer, in einen Oszillationsmischer überführt wird, in den Gas, vorzugsweise Luft, eingeblasen wird, um das Gemisch aufzuschäumen.

12. Verfahren nach einem der Ansprüche 1 bis 9, wobei in Schritt (ii.2) die Zugabe des Schaumbildners und das Aufschäumen in einem Oszillationsmischer durchgeführt werden.

13. Verfahren nach einem der vorhergehenden Ansprüche, wobei die Rohdichte des mit Schaum vermischten Gemischs in Schritt (ii.1) oder des aufgeschäumten Gemischs in Schritt (ii.2) 40 bis 120 kg/m³, vorzugsweise 60 bis 100 kg/m³ beträgt.

14. Verfahren nach einem der vorhergehenden Ansprüche, wobei in Schritt (ii.2) das aufgeschäumte Gemisch aus dem Oszillationsmischer direkt in eine Form abgelassen und in der Form durch bewegliche Mischwerkzeuge, die vorzugsweise durch die Form bewegt werden, vermischt wird.

15. Verfahren nach einem der Ansprüche 1 bis 13, wobei das aufgeschäumte Gemisch aus Schritt (ii.2) aus dem Oszillationsmischer in einen weiteren Mischer, vorzugsweise Horizontalmischer, überführt wird, darin mit geringer Drehzahl vermischt und daraus in eine Form abgelassen wird.

16. Verfahren nach einem der vorhergehenden Ansprüche, wobei die Rohmischung für 6-72 h in der Form verbleibt, vorzugsweise bei einer im Wesentlichen konstanten Temperatur, wobei die Temperatur bevorzugt in etwa der Ausgangstemperatur des wässrigen Gemischs von Schritt (i) und des Schaums von Schritt (ii.1) oder des aufgeschäumten Gemischs von Schritt (ii.2) entspricht.

17. Verfahren nach einem der vorhergehenden Ansprüche, wobei die Form vor dem Dampfhärten teilweise oder vollständig entfernt wird.

18. Verfahren nach einem der vorhergehenden Ansprüche, wobei das Rohmaterial aus Schritt (iii) in kleinere Teilstücke zerteilt wird.

19. Verfahren nach einem der vorhergehenden Ansprüche, wobei das getrocknete Material nach Schritt (v) mechanisch bearbeitet wird.

20. Poröses mineralisches Baumaterial, erhältlich nach einem Verfahren der vorhergehenden Ansprüche, wobei das Baumaterial Calziumsilikathydrat umfasst und eine Rohdichte von 80-130 kg/m³ und einen Wärmeleitwert λ von weniger als 0,040 W/mK aufweist.

21. Baumaterial nach Anspruch 20, **dadurch gekennzeichnet dass** es einen Wärmeleitwert λ von weniger als 0,039 W/mK, bevorzugt weniger als 0,038 W/mK, weiter bevorzugt weniger als 0,037 W/mK aufweist.

22. Baumaterial nach Anspruch 20 oder 21, wobei es sich um ein Wärmedämmmaterial oder Brandschutzmaterial handelt.

## Claims

1. Method for producing a porous mineral building material based on calcium silicate hydrate, comprising the steps of:
(i) providing an aqueous mixture which comprises water, SiO₂, calcium hydroxide, cement, potassium silicate, and a hardening accelerator, wherein first water and potassium silicate are mixed and then the other solid constituents are added and mixed in;
(ii.1) providing a foam by introducing a gas, in particular air, into a mixture comprising water and a foaming agent, and mixing the foam into the aqueous mixture from step (i) in order to obtain a raw mixture; or
(ii.2) introducing at least one foaming agent into the aqueous mixture from step (i), foaming the resulting mixture while supplying a gas, in particular air, in an oscillation mixer, and optionally transferring the foamed mixture to a further mixer, preferably a horizontal mixer, and mixing at low speed, preferably in the range of 20-200 rpm, to obtain a raw mixture;
(iii) introducing the raw mixture into a mould, and leaving the raw mixture in the mould for at least 5 hours, preferably for at least 10 hours, and particularly preferably for at least 15 hours, in order to obtain a raw material;
(iv) steam hardening the raw material obtained in step (iii) in an autoclave, if necessary after cutting said raw material into parts; and
(v) drying the steam-hardened raw material.

2. Method according to claim 1, wherein the hardening accelerator comprises calcium silicate hydrate crystals, preferably in aqueous suspension.

3. Method according to either claim 1 or claim 2, wherein the aqueous mixture in step (i) comprises at least one further constituent selected from kaolin, recycled material, hydrophobising agents, further concrete additives, or mixtures thereof.

4. Method according to any of the preceding claims, wherein the aqueous mixture in step (i), based on the total solids content, comprises 25-35 wt.% SiO₂, 18-35 wt.% calcium hydroxide, 25-45 wt.% cement, 1-5 wt.% potassium silicate, optionally 5-10 wt.% kaolin, preferably 6-8% wt.% kaolin, and 3-8 wt.% hardening accelerator.

5. Method according to any of the preceding claims, wherein the ratio of water to solids in the aqueous mixture from step (i) is about 0.5:1 to 1.5:1, preferably 0.6:1 to 1:1.

6. Method according to any of the preceding claims, wherein the aqueous mixture in step (i) does not comprise any organic or inorganic fibers.

7. Method according to any of the preceding claims, wherein the temperature of the aqueous mixture from step (i) is about 19-30°C, preferably about 20-25°C.

8. Method according to any of the preceding claims, wherein the foaming agent comprises a surfactant or protein.

9. Method according to any of the preceding claims, wherein in step (ii.1), when mixing in the foam, the temperature of the foam approximately corresponds to the temperature of the aqueous mixture from step (i), preferably wherein the temperature of the foam does not deviate from the temperature of the aqueous mixture by more than 5 K.

10. Method according to any of the preceding claims, wherein in step (ii.2) the aqueous mixture from step (i) is transferred to a second mixer, preferably a vertical mixer, and there is mixed with at least one foaming agent, preferably under conditions in which foaming is substantially avoided.

11. Method according to claim 10, wherein the mixture mixed with foaming agent is transferred directly or via at least one storage container, for example a further vertical mixer, to an oscillation mixer into which gas, preferably air, is blown in order to foam the mixture.

12. Method according to any of claims 1 to 9, wherein in step (ii.2) the addition of the foaming agent and the foaming are carried out in an oscillating mixer.

13. Method according to any of the preceding claims, wherein the bulk density of the mixture mixed with foam in step (ii.1) or of the foamed mixture in step (ii.2) is 40 to 120 kg/m³, preferably 60 to 100 kg/m³.

14. Method according to any of the preceding claims, wherein in step (ii.2) the foamed mixture is discharged from the oscillation mixer directly into a mould and is mixed in the mould by movable mixing tools that are preferably moved through the mould.

15. Method according to any of claims 1 to 13, wherein the foamed mixture from step (ii.2) is transferred from the oscillation mixer to a further mixer, preferably a horizontal mixer, mixed therein at low speed, and discharged therefrom into a mould.

16. Method according to any of the preceding claims, wherein the raw mixture remains in the mould for 6-72 hours, preferably at a substantially constant temperature, wherein the temperature is preferably approximately the starting temperature of the aqueous mixture from step (i) and of the foam from step (ii.1) or of the foamed mixture of step (ii.2).

17. Method according to any of the preceding claims, wherein the mould is partially or completely removed prior to steam hardening.

18. Method according to any of the preceding claims, wherein the raw material from step (iii) is divided into smaller pieces.

19. Method according to any of the preceding claims, wherein the dried material is mechanically processed following step (v).

20. Porous mineral building material, obtainable by means of a method according to the preceding claims, wherein the building material comprises calcium silicate hydrate and has a bulk density of 80-130 kg/m³ and a thermal conductivity A of less than 0.040 W/mK.

21. Building material according to claim 20, **characterised in that** said building material has a thermal conductivity A of less than 0.039 W/mK, preferably less than 0.038 W/mK, more preferably less than 0.037 W/mK.

22. Building material according to either claim 20 or claim 21, wherein said building material is a thermal insulation material or fire protection material.

## Revendications

1. Procédé de fabrication d'un matériau de construction minéral poreux à base de silicate de calcium hydraté, comprenant les étapes suivantes :
(i) fournir un mélange aqueux comprenant de l'eau, du SiO₂, de la chaux hydratée, du ciment, du silicate de potassium et un accélérateur de durcissement, dans lequel de l'eau et du silicate de potassium sont d'abord mélangés puis les autres constituants solides sont ajoutés et mélangés,
(ii.1) fournir une mousse en introduisant un gaz, en particulier de l'air, dans un mélange comprenant de l'eau et un agent moussant, et en mélangeant la mousse dans le mélange aqueux de l'étape (i) pour obtenir un mélange brut ou
ii.2) incorporer au moins un agent moussant dans le mélange aqueux de l'étape (i), faire mousser le mélange résultant en fournissant un gaz, en particulier de l'air, dans un mélangeur oscillant, et éventuellement transférer le mélange moussé vers un autre mélangeur, de préférence un mélangeur horizontal, et mélanger à faible vitesse, de préférence dans la plage de 20-200 tr/min, pour obtenir un mélange brut,
(iii) placer le mélange brut dans un moule, et laisser le mélange brut dans le moule pendant au moins 5 h, de préférence pendant au moins 10 h, et de manière particulièrement préférée pendant au moins 15 h, pour obtenir un matériau brut,
(iv) faire durcir à la vapeur le matériau brut obtenu à l'étape (iii) dans un autoclave, éventuellement après l'avoir découpée en morceaux, et
(v) faire sécher le matériau brut durci à la vapeur.

2. Procédé selon la revendication 1, dans lequel l'accélérateur de durcissement comprend des cristaux de silicate de calcium hydraté, de préférence en suspension aqueuse.

3. Procédé selon les revendications 1 ou 2, dans lequel le mélange aqueux de l'étape (i) comprend au moins un autre constituant choisi parmi le kaolin, un matériau de retour, des agents hydrophobes, d'autres additifs pour béton et leurs mélanges.

4. Procédé selon l'une des revendications précédentes, dans lequel le mélange aqueux de l'étape (i) comprend, sur la base de la teneur totale en solides,
25-35 % en poids de SiO₂,
18-35 % en poids de chaux hydratée,
25-45 % en poids de ciment,
1-5 % en poids de silicate de potassium,
éventuellement 5-10 % en poids, de préférence 6-8 % en poids de kaolin, et 3-8 % en poids d'accélérateur de durcissement.

5. Procédé selon l'une des revendications précédentes, dans lequel le rapport de l'eau au solide dans le mélange aqueux de l'étape (i) est d'environ 0,5:1 à 1,5:1, de préférence de 0,6:1 à 1:1.

6. Procédé selon l'une des revendications précédentes, dans lequel le mélange aqueux de l'étape (i) ne comprend pas de fibres organiques ou inorganiques.

7. Procédé selon l'une des revendications précédentes, dans lequel la température du mélange aqueux de l'étape (i) est d'environ 19-30°C, de préférence d'environ 20-25°C.

8. Procédé selon l'une des revendications précédentes, dans lequel l'agent moussant comprend un agent tensioactif ou une protéine.

9. Procédé selon l'une quelconque des revendications précédentes, dans lequel, dans l'étape (ii.1), lors du mélange de la mousse, la température de la mousse est approximativement la même que la température du mélange aqueux de l'étape (i), de préférence dans lequel la température de la mousse ne diffère pas de plus de 5K de la température du mélange aqueux.

10. Procédé selon l'une quelconque des revendications précédentes, dans lequel, à l'étape (ii.2), le mélange aqueux de l'étape (i) est transféré dans un deuxième mélangeur, de préférence un mélangeur vertical, où il est mélangé avec au moins un agent moussant, de préférence dans des conditions dans lesquelles le moussage est sensiblement évité.

11. Procédé selon la revendication 10, dans lequel le mélange auquel a été ajouté un agent moussant est transféré directement ou via au moins un récipient de réception, par exemple un autre mélangeur vertical, dans un mélangeur oscillant dans lequel du gaz, de préférence de l'air, est injecté afin de faire mousser le mélange.

12. Procédé selon l'une quelconque des revendications 1 à 9, dans lequel, à l'étape (ii.2), l'addition de l'agent moussant et le moussage sont effectués dans un mélangeur oscillant.

13. Procédé selon l'une des revendications précédentes, dans lequel la densité brute du mélange mélangé à la mousse dans l'étape (ii.1) ou du mélange moussé dans l'étape (ii.2) est de 40 à 120 kg/m³, de préférence de 60 à 100 kg/m³.

14. Procédé selon l'une des revendications précédentes, dans lequel, à l'étape (ii.2), le mélange moussé est déchargé du mélangeur oscillant directement dans un moule et mélangé dans le moule par des outils de mélange mobiles qui sont de préférence déplacés à travers le moule.

15. Procédé selon l'une des revendications 1 à 13, dans lequel le mélange moussé de l'étape (ii.2) est transféré du mélangeur oscillant dans un autre mélangeur, de préférence un mélangeur horizontal, y est mélangé à faible vitesse et est évacué de celui-ci dans un moule.

16. Procédé selon l'une des revendications précédentes, dans lequel le mélange brut reste dans le moule pendant 6 à 72 h, de préférence à une température sensiblement constante, laquelle température correspond de préférence approximativement à la température de départ du mélange aqueux de l'étape (i) et de la mousse de l'étape (ii.1) ou du mélange moussé de l'étape (ii.2).

17. Procédé selon l'une des revendications précédentes, dans lequel le moule est partiellement ou complètement retiré avant le durcissement à la vapeur.

18. Procédé selon l'une des revendications précédentes, dans lequel le matériau brut de l'étape (iii) est découpé en plus petits morceaux.

19. Procédé selon l'une des revendications précédentes, dans lequel le matériau séché de l'étape (v) est traité mécaniquement.

20. Matériau de construction minéral poreux pouvant être obtenu par un procédé selon l'une des revendications précédentes, dans lequel le matériau de construction comprend du silicate de calcium hydraté et a une densité brute de 80 à 130 kg/m³ et une valeur de conductivité thermique λ inférieure à 0,040 W/mK.

21. Matériau de construction selon la revendication 20, **caractérisé en ce qu'**il présente une valeur de conductivité thermique λ inférieure à 0,039 W/mK, de préférence inférieure à 0,038 W/mK, plus préférablement inférieure à 0,037 W/mK.

22. Matériau de construction selon les revendications 20 ou 21, dans lequel il s'agit d'un matériau d'isolation thermique ou d'un matériau de protection contre l'incendie.
